# NEUE EUROPÄISCHE PATENTSCHRIFT

(11) **EP 2 046 611 B2**
(45) Veröffentlichungstag und Bekanntmachung des Hinweises auf die Entscheidung über den Einspruch: **28.08.2013**
(45) Hinweis auf die Patenterteilung: 05.05.2010
(21) Anmeldenummer: 07785631.8
(22) Anmeldetag: 12.07.2007
(51) Int. Cl.: B60S 9/08

(54) **HUBEINRICHTUNG**
LIFTING DEVICE
DISPOSITIF DE LEVAGE

(30) Priorität: 31.07.2006 DE 102006035917
(43) Veröffentlichungstag der Anmeldung: 15.04.2009
(73) Patentinhaber: Haacon Hebetechnik GmbH, 97896 Freudenberg/Main (DE)
(72) Erfinder: BIRKHOLZ, Holger, 97906 Faulbach (DE); LAZARUS, Konrad, 97896 Freudenberg (DE); MILTENBERGER, Robert, 63897 Miltenberg (DE); NATTERER, Ralf, 63853 Mömlingen (DE)
(74) Vertreter: Tappe, Hartmut
(86) Internationale Anmeldenummer: PCT/DE2007/001257
(87) Internationale Veröffentlichungsnummer: WO 2008/014749

(56) Entgegenhaltungen:
- DE-A1- 19 836 635
- US-A- 6 099 016
- US-A1- 2003 089 898

## Beschreibung

Die vorliegende Erfindung betrifft eine Hubeinrichtung, insbesondere Sattelstütze oder dergleichen, mit einem Schaftrohr und einem gegenüber dem Schaftrohr verfahrbaren Stützrohr, wobei am Schaftrohr ein Hubgetriebe angeordnet ist, das eine Antriebswelleneinrichtung zum Anschluss einer Antriebseinrichtung und eine Abtriebswelleneinrichtung zum Antrieb einer im Stützrohr angeordneten Hubspindel aufweist, die sich mit einem Ende an einer im Schaftrohr angeordneten Druckplatte abstützt und mit dem laufenden Ende mit einer im Stützrohr angeordneten Spindelmutter zusammenwirkt.

Hubeinrichtungen der eingangs genannten Art wie in WO-A-2007/012427 nach Art. 54(3) EPÜ offenbart werden in der Anwendung als Sattelstütze beispielsweise als höhenverstellbare Abstützeinrichtungen für so genannte "Sattelauflieger" verwendet, wenn diese unabhängig von einem Zugfahrzeug abgestellt werden. Der im Hubbetrieb durch die Hubspindel wirkende Kraftfluss wird einerseits über die Druckplatte, an der sich die Hubspindel mit einem Ende abstützt in das Schaftrohr eingeleitet. Die weitere Schnittstelle im Kraftfluss ist zwischen dem laufenden Ende der Hubspindel und der Spindelmutter zum Stützrohr hin ausgebildet. Da gleichzeitig mit der Kraftübertragung eine Relativbewegung der Hubspindel in der Spindelmutter erfolgt, ist die Spindelmutter besonderen mechanischen Belastungen ausgesetzt, die einen Austausch der Spindelmutter erforderlich machen können. Zum anderen ist es natürlich für den reibungslosen Betrieb der Hubeinrichtung wesentlich, dass die mechanische Verbindung der Spindelmutter zum Stützrohr zuverlässig ist und den auftretenden großen Beanspruchungen Stand hält. Darüber hinaus ist es wünschenswert, dass der mit der Installation der Spindelmutter am Stützrohr verbundene Herstellungsaufwand möglichst gering ist.

Dokument DE-A-19836635 offenbart die Merkmale des Oberbegriffs des Anspruchs 1.

Der vorliegenden Erfindung liegt daher die Aufgabe zugrunde, eine Hubeinrichtung vorzuschlagen, die so gestaltet ist, dass die Spindelmutter zum einen mechanisch sicher im Stützrohr angeordnet ist, leicht austauschbar ist und zudem mit geringem Herstellungsaufwand im Stützrohr installiert werden kann.

Diese Aufgabe wird durch eine Hubeinrichtung mit den Merkmalen des Anspruchs 1 gelöst.

Bei der erfindungsgemäßen Hubeinrichtung ist die Spindelmutter mit einem Riegelbund mit zumindest zwei Riegeleinrichtungen versehen, die mit an der Rohrwand des Stützrohrs ausgebildeten Riegelfallen zusammenwirken, derart, dass bei koaxialer Ausrichtung der Spindelmutter mit dem Stützrohr die Spindelmutter in einer Montagedrehwinkelstellung in das Stützrohr einführbar ist, und durch Verdrehen um die Längsachse des Stützrohrs in eine Verriegelungsstellung überführbar ist, in der die Riegeleinrichtungen in Eingriff mit den Riegelfallen gelangen.

Die erfindungsgemäß gestaltete Hubeinrichtung gewährleistet aufgrund der einander durchdringenden Anordnung der Riegeleinrichtungen und der Rohrwand des Stützrohrs eine besonders belastbare Verbindung zwischen der Spindelmutter und dem Stützrohr. Darüber hinaus ist die Installation der Spindelmutter am Ort ihres Sitzes im Stützrohr allein aufgrund des Verriegelungseffektes durchführbar ohne Zuhilfenahme besonderer Werkzeuge oder ergänzender Verbindungsmittel, also ohne mechanische Verbindungsmittel oder den Einsatz von Fügetechnik, wie beispielsweise Schweißen. Hieraus ergibt sich auch, dass eine besonders leichte Austauschbarkeit der Spindelmutter gewährleistet ist, für den Fall, dass ein vorzeitiger Verschleiß der Spindelmutter feststellbar sein sollte.

Gemäß einer vorteilhaften Ausführungsform weist der Riegelbund eine Umfangskontur mit vier jeweils paarweise einander gegenüberliegenden Führungsrändern auf, die entsprechend dem Innenabmaß des als Quadratrohr ausgebildeten Stützrohrs voneinander beabstandet sind, und mit vier in den Eckbereichen des Riegelbunds ausgebildeten Riegelrändern. Darüber hinaus sind die Riegelfallen durch schlitzförmige Ausnehmungen in einander gegenüberliegenden Rohrwandabschnitten des Stützrohrs gebildet.

Derart ausgestaltet wirkt der Riegelbund trotz einer denkbar einfach gestalteten Umfangskontur und auf denkbar einfachste Art ausgestalteten Riegelfallen als zuverlässige Verriegelungseinrichtung für die Spindelmutter im Stützrohr.

Wenn darüber hinaus die Umfangskontur des Riegelbunds als Achteck-Kontur ausgebildet ist, derart, dass die Riegelränder durch abgeflachte Ecken des Riegelbunds gebildet sind, ist die zur Erzeugung des Verriegelungseffektes notwendige relative Drehbewegung der Spindelmutter um die Längsachse des Stützrohrs möglich, ohne dass die geometrische Gestaltung der Umfangskontur Hinterschneidungen aufweisen könnte, die die Verriegelungsbewegung behindern könnten. Vielmehr wird aufgrund einer derart ausgebildeten Kontur sogar eine äußere Führung der Verriegelungsbewegung in dem Kontaktbereich zwischen der Umfangskontur des Riegelbunds und der Innenkontur des Stützrohres erreicht.

Eine besonders einfache Realisierung einer Spindelmutter, die die Funktion der Spindelmutter mit einer Verriegelungseinrichtung vereinbart, wird möglich, wenn zur Ausbildung eines Mutterngewindes auf dem Riegelbund ein Gewindebund mit Innengewinde angeordnet ist.

Wenn darüber hinaus der Gewindebund an seinem Außenumfang mit vier paarweise einander gegenüberliegend angeordneten, sich radial zu den Riegelrändern erstreckenden Stützstegen versehen ist, ermöglichen die Stützstege zum einen eine mechanische Stabilisierung des Verbunds aus dem Gewindebund um den Riegelbund. Zum anderen dienen die Stützstege zur Zentrierung der Spindelmutter in ihrer Verriegelungsstellung im Stützrohr.

Um unmittelbar im Bereich des Gewindeeingriffs zwischen der Hubspindel und der Spindelmutter ein Schmiermittelreservat vorsehen zu können, ist es vorteilhaft, wenn der Gewindebund an seinem Oberrand mit einer wannenförmigen Ausnehmung versehen ist.

Nachfolgend wird eine bevorzugte Ausführungsform der Hubeinrichtung unter Bezugnahme auf die Zeichnung näher erläutert.

Es zeigen:
- **Fig. 1**: eine Hubeinrichtung in Seitenansicht;
- **Fig. 2**: die in **Fig. 1** dargestellte Hubeinrichtung in Längsschnittdarstellung längs Schnittlinienverlauf II-II in **Fig. 1****;**
- **Fig. 3**: ein Schaftrohr der in **Fig. 1** dargestellten Hubeinrichtung im Querschnitt;
- **Fig. 4**: eine alternative Querschnittsausbildung des in **Fig. 3** dargestellten Schaftrohr-Querschnitts;
- **Fig. 5**: eine in Montagedrehwinkelstellung in einem Stützrohr der Hubeinrichtung eingeführte Spindelmutter in Seitenansicht;
- **Fig. 6**: die in **Fig. 5** dargestellte Spindelmutter in Draufsicht;
- **Fig. 7**: die in **Fig. 5** dargestellte Spindelmutter in Verriegelungsstellung in Seitenansicht;
- **Fig. 8**: die in **Fig. 7** dargestellte Spindelmutter in Draufsicht

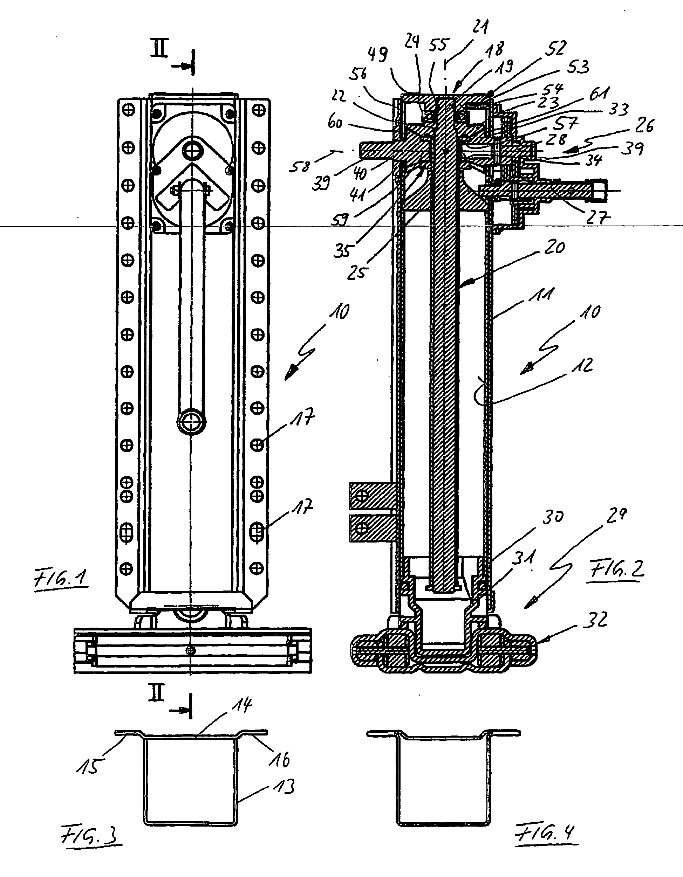

Aus einer Zusammenschau der **Fig. 1** und **2** ergibt sich der Aufbau einer Hubeinrichtung 10 mit einem Schaftrohr 11 und einem koaxial im Schaftrohr 11 angeordneten Stützrohr 12. Das Schaftrohr 11 ist gemäß dem in **Fig. 3** ausgeführten Ausführungsbeispiel aus einem U-förmigen Schaftrohrprofil 13 und einer das Profil 13 zu einem Vierkantrohr ergänzenden Montageplatte 14 zusammengesetzt, die gleichzeitig die Rückwand des Schaftrohrs 11 bildet. Die Montageplatte 14 dient zum Anschluss an ein Fahrzeugchassis und weist an seitlich ausgebildeten Anschlussleisten 15, 16 eine Vielzahl von Montagebohrungen 17 auf, die eine Verbindung an unterschiedlich ausgebildeten Fahrzeugchassis bzw. in unterschiedlichen Montagehöhen an einem Fahrzeugschassis ermöglichen.

Wie sich insbesondere aus der in **Fig. 2** gezeigten Schnittdarstellung ergibt, erstreckt sich das im Schaftrohr 11 aufgenommene Stützrohr 12 im Wesentlichen über die gesamte Länge des Schaftrohrs 11. Wie aus **Fig. 2** ferner ersichtlich, weist das Schaftrohr 11 quasi als stirnseitigen Abschluss eine Druckplatte 18 auf, die zur Aufnahme eines oberen Hubspindelendes 19 einer Hubspindel 20 dient, die sich auf einer Längsachse 21 der Hubeinrichtung 10 bzw. des Stützrohrs 12 erstreckt. Am oberen Hubspindelende 19 befindet sich ferner ein auf einem Wellenbund 22 drehfest angeordnetes Hubspindelzahnrad 23, das zum Antrieb der Hubspindel 20 dient und sich zusammen mit der Hubspindel 20 über ein Axiallager 24 an der Druckplatte 18 abstützt.

Auf der Hubspindel 20 ist eine Spindelmutter 25 angeordnet, die an ihrem Umfang drehstarr mit dem Stützrohr 12 verbunden ist, so dass eine Rotation der Hubspindel 20 in Folge eines Antriebs des Hubspindelzahnrads 23 über den Gewindeeingriff der Hubspindel 20 mit der Spindelmutter 25 je nach Drehrichtung ein Ausfahren oder Einfahren des Stützrohrs 12 aus dem Schaftrohr 11 hinaus oder in dieses hinein bewirkt.

Zum Antrieb des Hubspindelzahnrads 23 dient ein unterhalb der Druckplatte 18 angeordnetes Hubgetriebe 26, das eine Antriebswellenanordnung 27 und eine Abtriebswellenanordnung 28, die auf das Hubspindelzahnrad 23 wirkt, umfasst.

Am unteren Ende des Stützrohres 12 befindet sich eine Fußeinrichtung 29, die eine mit einem unteren Stirnende 30 des Stützrohres 12 verbundene Fußaufnahme 31 sowie einen mit der Fußaufnahme 31 verbundenen Schwenkfuß 32 aufweist.

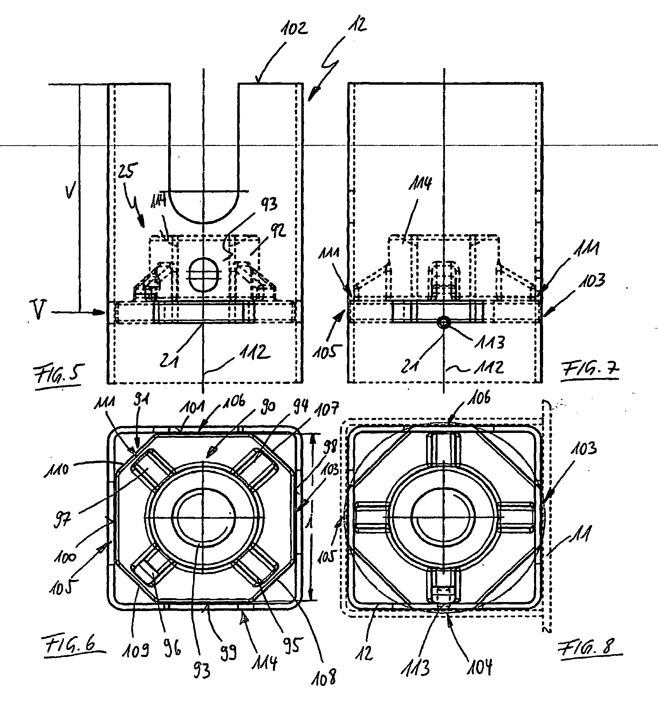

Wie sich aus einer Zusammenschau der **Fig. 5** und **6** ergibt, die die Spindelmutter 25 in Montagedrehwinkelstellung in das Stützrohr 12 eingesetzt zeigen, weist die Spindelmutter 25 einen Riegelbund 90 auf, der mit einer achteckigen Umfangskontur 91 versehen ist. Auf dem Riegelbund 90 befindet sich ein Gewindebund 92, dessen Bohrungswandung mit einem dem Gewinde der Hubspindel 20 entsprechenden Spindelmuttergewinde 93 versehen ist. Am Umfang des Gewindebunds 92 sind radial nach außen verlaufende Stützstege 94, 95, 96 und 97 vorgesehen, die unter anderem für eine sichere mechanische Verbindung des Gewindebunds 92 zum Riegelbund 90 sorgen.

Wie insbesondere aus **Fig. 6** zu ersehen ist, ist der Riegelbund 90 als Achteck-Kontur ausgebildet mit paarweise einander gegenüberliegenden Führungsrändern 98, 99, 100 und 101, die jeweils entsprechend dem Innenmaß i des hier als Vierkantrohr ausgebildeten Stützrohrs 12 voneinander beabstandet sind. Somit sorgen die Führungsränder 98 bis 101 beim Einsetzen der Spindelmutter 25 von oben in das Stützrohr 12 in Montagedrehwinkelstellung der Spindelmutter 25 für eine radiale Führung während der Ausführung des Verschiebeweges v, um die Spindelmutter 25 von einem oberen Stirnende 102 des Stützrohres 12 in seine axiale Verriegelungsposition V zu verbringen, in der sich der Riegelbund 90 in einer gemeinsamen Ebene mit in der Rohrwandung des Stützrohrs 12 ausgebildeten Verriegelungsausnehmungen 103, 104, 105 und 106 befindet.

Wie **Fig. 6** ferner zeigt, weist der Riegelbund 90 zur Ausbildung von vier ebenfalls einander paarweise gegenüberliegend angeordneten Riegelrändern 107, 108, 109 und 110 abgeflachte Ecken auf. Die Riegelränder 107 bis 110 verlaufen jeweils quer zu einem zugeordneten Stützsteg 94 bis 97 und bilden zusammen mit diesem jeweils einen Riegelabsatz 111 aus.

Aus einer Zusammenschau der **Fig. 7** und **8** ergibt sich, dass nach einer Überführung der Spindelmutter 25 von der in den **Fig. 5** und **6** dargestellten Montagedrehwinkelstellung in die in den **Fig.7** und **8** dargestellte Verriegelungsstellung ein Eingriff der Riegelränder 107 bis 110 in die Verriegelungsausnehmungen 103 bis 106 erfolgt, derart, dass die von den Riegelrändern 107 bis 110 und den Stützstegen 94 bis 97 jeweils ausgebildeten, im Profil L-förmigen Riegelabsätze 111 zumindest teilweise in die Verriegelungsausnehmungen 103 bis 106 eingreifen und sich zumindest teilweise an der Innenseite der Rohrwandung des Stützrohrs 12 abstützen. Hierdurch wird zum einen der erwünschte Verriegelungseffekt erreicht, zum anderen erfolgt mit der Verriegelung eine Zentrierung der Spindelmutter 25 im Stützrohr 12, sodass eine im Wesentlichen koaxiale Ausrichtung einer Spindelmutterachse 112 mit der Längsachse 21 des Stützrohrs 12 die Folge ist.

Wenn, wie in **Fig. 8** dargestellt, das Stützrohr 12 mit der in Verriegelungsstellung befindlichen Spindelmutter 25 zur Montage der Hubeinrichtung 10 in das Schaftrohr 11 eingeführt wird, ergibt sich aufgrund der allseitig dicht umschließenden Anordnung der Rohrwandung des Schaftrohrs 11 eine Verdrehsicherung, die eine unerwünschte Verdrehung der Spindelmutter 25 aus der Verriegelungsstellung verhindert. Bei Bedarf kann natürlich auch zur Sicherung der Verriegelungsstellung unabhängig von der umschließenden Anordnung des Schaftrohrs 11 eine gesonderte Sicherung, wie beispielsweise der in den **Fig. 7** und **8** dargestellte Spannstift 113 verwendet werden.

Wie insbesondere aus den **Fig. 5** und **7** zu ersehen ist, ist im Falle des vorliegenden Ausführungsführungsbeispiels der Gewindebund 92 der Spindelmutter 25 an seinem Oberrand mit einer wannenförmigen Ausnehmung 114 versehen, die zur Aufnahme eines Schmiermittelreservoirs Verwendung finden kann.

## Patentansprüche

1. Hubeinrichtung (10), insbesondere Sattelstütze oder dergleichen, mit einem Schaftrohr (11) und einem gegenüber dem Schaftrohr verfahrbaren Stützrohr (12), wobei am Schaftrohr ein Hubgetriebe (26) angeordnet ist, das eine Antriebswellenanordnung (27) zum Anschluss einer Antriebseinrichtung und eine Abtriebswellenanordnung (28) zum Antrieb einer im Stützrohr angeordneten Hubspindel (20) aufweist, die sich mit einem Ende an einer im Schaftrohr angeordneten Druckplatte (18) abstützt und mit dem laufenden Ende mit einer im Stützrohr angeordneten Spindelmutter (25) zusammenwirkt, **dadurch gekennzeichnet dass** die Spindelmutter einen Riegelbund (90) mit zumindest zwei Riegeleinrichtungen (107, 108, 109, 110) aufweist, die mit an der Rohrwand des Stützrohrs ausgebildeten Riegelfallen (103, 104, 105, 106) zusammenwirken, derart, dass bei koaxialer Ausrichtung der Spindelmutter mit dem Stützrohr die Spindelmutter in einer Montagedrehwinkelstellung in das Stützrohr einführbar ist, und durch Verdrehen um eine Längsachse (21) des Stützrohrs in eine Verriegelungsstellung überführbar ist, in der die Riegeleinrichtungen in Eingriff mit den Riegelfallen gelangen, wobei
die mechanische Verbindung zur Übertragung einer Stützlast durch den verriegelnden Eingriff der am Riegelbund ausgebildeten Riegeleinrichtungen in die an der Rohrwand des Stützrohrs ausgebildeten Riegelfallen erfolgt.

2. Hubeinrichtung nach Anspruch 1,
**dadurch gekennzeichnet,**
**dass** der Riegelbund (90) eine Umfangskontur (91) aufweist mit vier jeweils paarweise einander gegenüberliegenden Führungsrändern (98, 99, 100, 101), die entsprechend dem Innenmaß des als Quadratrohr ausgebildeten Stützrohrs (12) voneinander beabstandet sind, und mit vier in den Eckbereichen des Riegelbunds ausgebildeten Riegelrändern (107, 108, 109, 110), und dass die Riegelfallen durch schlitzförmige Ausnehmungen (103, 104, 105, 106) in einander gegenüberliegenden Rohrwandabschnitten des Stützrohrs gebildet sind.

3. Hubeinrichtung nach Anspruch 2,
**dadurch gekennzeichnet,**
**dass** die Umfangskontur (91) des Riegelbunds (90) als Achteck-Kontur ausgebildet ist, derart, dass die Riegelränder (107, 108, 109, 110) durch abgeflachte Ecken des Riegelbundes gebildet sind.

4. Hubeinrichtung nach einem der vorangehenden Ansprüche,
**dadurch gekennzeichnet,**
**dass** zur Ausbildung eines Mutterngewindes (93) auf dem Riegelbund (90) ein Gewindebund (92) mit Innengewinde angeordnet ist.

5. Hubeinrichtung nach Anspruch 4,
**dadurch gekennzeichnet,**
**dass** der Gewindebund (92) an seinem Außenumfang mit vier paarweise einander gegenüberliegend angeordneten, sich radial zu den Riegelrändern (107, 108, 109, 110) erstreckenden Stützstegen (94, 95, 96, 97) versehen ist.

6. Hubeinrichtung nach Anspruch 4 oder 5,
**dadurch gekennzeichnet,**
**dass** der Gewindebund (92) an seinem Oberrand mit einer wannenförmigen Ausnehmung (114) versehen ist.

## Claims

1. A lifting device (10), in particular a semitrailer support or the like, comprising a shank tube (11) and a support tube (12) which is movable with respect to the shank tube, wherein on the shank tube, a lifting gear mechanism (26) is arranged which comprises an input shaft arrangement (27) for connecting a drive device and an output shaft arrangement (28) for driving a lifting spindle (20) which is arranged within the support tube and which rests with one end on a pressure plate (18) arranged within the shank tube and interacts with the moving end with a spindle nut (25) arranged in the support tube,
**characterized in that**
the spindle nut comprises a locking collar (90) with at least two locking devices (107, 108, 109, 110) which interact with locking latches (103, 104, 105, 106) formed on the tube wall of the support tube in such a manner that, with a coaxial alignment of the spindle nut with the support tube, the spindle nut can be inserted, in an assembly rotational angle position, into the support tube and can be moved by rotating about a longitudinal axis (21) of the support tube into a locking position, in which the locking devices get into engagement with the locking latches, wherein the mechanical connection for transmitting a support load is effected by the locking devices formed on the locking collar getting into locking engagement with the locking latches formed on the tube wall of the support tube.

2. The lifting device according to claim 1,
**characterized in that**
the locking collar (90) comprises a circumferential contour (91) with four guide rims (98, 99, 100, 101), which are each arranged opposing one another in pairs and which are spaced apart from one another corresponding to the inner dimension of the support tube (12) formed as a square tube, and with four locking rims (107, 108, 109, 110) formed in the corner regions of the locking collar, and that the locking latches are formed by slotted recesses (103, 104, 105, 106) in opposing tube wall sections of the support tube.

3. The lifting device according to claim 2,
**characterized in that**
the circumferential contour (91) of the locking collar (90) is formed as an octagon-contour in such a manner that the locking rims (107, 108, 109, 110) are formed by flattened corners of the locking collar.

4. The lifting device according to any one of the preceding claims,
**characterized in that**
for formation of a nut thread (93), a threaded collar (92) with an internal thread is arranged on the locking collar (90).

5. The lifting device according to claim 4,
**characterized in that**
the threaded collar (92) is provided on its outer circumference with four support ribs (94, 95, 96, 97) which are arranged opposing one another in pairs and which extend radially to the locking rims (107, 108, 109, 110).

6. The lifting device according to claim 4 or claim 5,
**characterized in that**
the threaded collar (92) is provided with a trough-shaped recess (114) on its upper rim.

## Revendications

1. Dispositif de levage (10), notamment un support de remorque ou similaire, comprenant un tube de tige (11) et un tube de support (12) déplaçable par rapport au tube de tige, un mécanisme de levage (26) étant disposé sur le tube de tige et présentant un agencement d'arbre d'entraînement (27) pour le raccordement d'un dispositif d'entraînement et un agencement d'arbre de sortie (28) pour l'entraînement d'une broche de levage (20) disposée dans le tube de support, une extrémité de la broche de levage (20) s'appuyant sur une plaque de pression (18) disposée dans le tube de tige et l'extrémité mobile de la broche de levage (20) interagissant avec un écrou de broche (25) disposé dans le tube de support,
**caractérisé en ce que**
l'écrou de broche comprend une collerette de verrouillage (90) avec au moins deux dispositifs de verrouillage (107, 108, 109, 110) interagissant avec des clenches de verrouillage (103, 104, 105, 106) étant formées sur la paroi du tube de support, de telle sorte que l'écrou de broche puisse être inséré dans le tube de support dans une position d'angle de rotation nécessaire au montage lorsque l'écrou de broche est orienté coaxialement par rapport au tube de support et que l'écrou de broche puisse être transféré dans une position de verrouillage en tournant autour d'un axe longitudinal (21) du tube de support, ladite position de verrouillage permettant que les dispositifs de verrouillage viennent s'engrener avec les clenches de verrouillage, le raccordement mécanique pour le transfert d'une charge d' appui s' effectuant par les dispositifs de verrouillage formés sur la collerette de verrouillage venant s'engrener par verrouillage avec les clenches de verrouillage formées sur la paroi du tube de support.

2. Dispositif de levage selon la revendication 1,
**caractérisé en ce que**
la collerette de verrouillage (90) présente un contour périphérique (91) avec quatre rebords de guidage (98, 99, 100, 101) étant respectivement placés l'un en face de l'autre par paires et étant situés à une distance l'un de l'autre conformément aux dimensions intérieures du tube de support (12) conçu sous la forme d'un tube carré, et avec quatre rebords de verrouillage (107, 108, 109, 110) formés dans les régions de coin de la collerette de verrouillage, et **en ce que** les clenches de verrouillage sont formées par des évidements (103, 104, 105, 106) conçus sous la forme de fentes dans des sections de la paroi du tube de support qui sont placées l'une en face de l'autre.

3. Dispositif de levage selon la revendication 2,
**caractérisé en ce que**
le contour périphérique (91) de la collerette de verrouillage (90) est conçu sous la forme d'un contour octogonal, de telle sorte que les rebords de verrouillage (107, 108, 109, 110) soient formés par des coins aplatis de la collerette de verrouillage.

4. Dispositif de levage selon l'une quelconque des revendications précédentes,
**caractérisé en ce que**
pour la formation d'un filet d'écrou (93) une collerette filetée (92) avec un filet intérieur est disposée sur la collerette de verrouillage (90).

5. Dispositif de levage selon la revendication 4,
**caractérisé en ce que**
la collerette filetée (92) est munie sur sa périphérie extérieure de quatre âmes de support (94, 95, 96, 97) qui sont placées l'une en face de l'autre par paires et qui s'étendent radialement vers les rebords de verrouillage (107, 108, 109, 110).

6. Dispositif de levage selon la revendication 4 ou 5,
**caractérisé en ce que**
la collerette filetée (92) est munie sur son rebord supérieur d'un évidement (114) conçu sous la forme d'une cuve.
